# EUROPÄISCHE PATENTSCHRIFT

(11) **EP 3 300 152 B1**
(45) Veröffentlichungstag und Bekanntmachung des Hinweises auf die Patenterteilung: **09.11.2022**
(21) Anmeldenummer: 17190291.9
(22) Anmeldetag: 11.09.2017
(51) Int. Cl.: H01M 8/0267, H01M 8/04007, H01M 8/04029, H01M 8/04746, H01M 8/0204, H01M 8/10

(54) **BEFÜLLEN EINER POLYMERELEKTROLYTMEMBRANBRENNSTOFFZELLE MIT KÜHLWASSER**
FILLING OF A POLYMER ELECTROLYTE MEMBRANE FUEL CELL WITH COOLING WATER
REMPLISSAGE D'UNE PILE À COMBUSTIBLE À MEMBRANE ÉLECTROLYTE POLYMÈRE AVEC DE L'EAU DE REFROIDISSEMENT

(30) Priorität: 21.09.2016 DE 102016218096
(43) Veröffentlichungstag der Anmeldung: 28.03.2018
(73) Patentinhaber: thyssenkrupp Marine Systems GmbH, 24143 Kiel (DE); thyssenkrupp AG, 45143 Essen (DE)
(72) Erfinder: NEHTER, Pedro, 24226 Heikendorf (DE)
(74) Vertreter: thyssenkrupp Intellectual Property GmbH

(56) Entgegenhaltungen:
- EP-A1- 1 265 303
- DE-A1- 10 345 147
- DE-A1-102011 083 988
- DE-A1-102014 102 895

## Beschreibung

Die Erfindung betrifft ein Verfahren zum Befüllen einer Polymerelektrolytmembranbrennstoffzelle mit einer Kühlflüssigkeit.

Normale Kühlreisläufe sind üblicherweise für turbulente Strömungen ausgelegt, da der Wärmeübergang dann effizienter ist. Daher ist davon auszugehen, dass anhaftende Gasblasen von der Strömung mitgerissen werden und somit der Kühlkreislauf einfach entlüftet werden kann.

Bei flüssigkeitsgekühlten Brennstoffzellen erfüllt die Bipolarplatte die Aufgabe der Reaktandenführung, der Kühlmedienführung und der elektrischen Kontaktierung zweier Zellen. Zielvorgabe ist es, das Bauvolumen der Brennstoffzellenstapel bei gleichzeitig moderaten Druckverlusten so gering wie möglich zu gestalten. Hieraus ergeben sich kühlwasserseitig kleine Strömungsquerschnitte mit niedrigen Strömungsgeschwindigkeiten, so dass sich laminare Strömungsverhältnisse im Kühlkreislauf ergeben. Aufgrund der niedrigen Strömungsgeschwindigkeiten kann somit nicht mehr davon auszugehen werden, dass die an den wärmeübertragenen Bipolarplatten anhaftende Gasblasen von der Kühlwasserströmung mitgerissen und entlüftet werden können.

Eine Bipolarplatte mit Kühlung und Führung beider Reaktandgase ist beispielsweise aus der DE 10 2011 120 802 A1 bekannt.

Aus der DE 103 45 147 A1 ist ein Verfahren zur Herstellung einer Bipolarplattenanordnung mit einer Vielzahl von Kanälen bekannt, wobei ein Unterdruck erzeugt wird.

Aus der DE 10 2014 102 895 A1 ist ein Brennstoffzellenstapel mit Kanal- und Stegmerkmalen bekannt.

Aus der EP 1 265 303 A1 ist eine Polymerelektrolytbrennstoffzelle mit Kanälen für Kühlflüssigkeit bekannt.

DE 10 2011 083988 offenbart ein Verfahren zum Kühlen einer Brennstoffzellenanlage eines Unterseeboots.

Es stellt sich somit das Problem, dass sich in Polymerelektrolytmembranbrennstoffzellen Gasblasen im Kühlkreislauf sammeln und es so zu einer Reduktion der wärmeübertragenden Flächen kommt. Dadurch steigt das Risiko einer lokalen Überhitzung und somit Schädigung der Polymerelektrolytmembranbrennstoffzelle.

Aufgabe der Erfindung ist es, ein Verfahren zur Befüllung der Polymerelektrolytmembranbrennstoffzelle bereit zu stellen, mit welchem eine Schädigung der Polymerelektrolytmembranbrennstoffzelle durch lokale Überhitzung vermieden werden kann.

Gelöst wird diese Aufgabe durch das Verfahren mit den in Anspruch 1 angegebenen Merkmalen. Vorteilhafte Weiterbildungen ergeben sich aus den Unteransprüchen, der nachfolgenden Beschreibung sowie den Zeichnungen.

Das erfindungsgemäße Verfahren zum Befüllen einer Polymerelektrolytmembranbrennstoffzelle mit wenigstens einer ersten Bipolarplatte mit Kühlwasser weist die folgenden Schritte auf:
e) Evakuieren eines Kühlsystems der Polymerelektrolytmembranbrennstoffzelle auf einen Druck von weniger als 500 hPa,
m) Befüllen des Kühlsystems mit Kühlflüssigkeit.

Erfindungsgemäß weist das Verfahren zusätzlichen auf:
a) Anschließen einer Pumpe. Polymerelektrolytmembranbrennstoffzellen werden erfindungsgemäß zur außenluftunabhängigen Energieversorgung auf Unterseebooten eingesetzt. Daher ist es vorteilhaft, Geräte, welche nicht unbedingt erforderlich sind, entfernbar zu haben. So kann beispielsweise ein Befüllen der Polymerelektrolytmembranbrennstoffzelle mit Kühlflüssigkeit im Hafen erfolgen. Erfindungsgemäß führt das Unterseeboot die notwendige Pumpe nicht mit.

In einer weiteren Ausführungsform der Erfindung wird in Schritt e) das Kühlsystem auf einen Druck von weniger als 100 hPa, insbesondere von weniger als 10 hPa, evakuiert.

In einer weiteren Ausführungsform der Erfindung wird in Schritt e) das Kühlsystem auf einen Druck von mehr als 1 Pa, bevorzugt von mehr als 10 Pa, besonders bevorzugt von mehr als 1 hPa evakuiert.

Erfindungsgemäß weist das Verfahren zusätzlichen den folgenden Schritt auf:
d) Aufwärmen der Polymerelektrolytmembranbrennstoffzelle auf 40 °C bis 90 °C, bevorzugt auf 60 °C bis 85 °C, besonders bevorzugt auf 75 °C bis 80 °C.
Hierbei wird Schritt d) vor oder während Schritt e) durchgeführt.

Erfindungsgemäß weist das Verfahren zusätzlichen den folgenden Schritt auf:
f) Einleiten von gasförmigem Wasser.

In einer weiteren Ausführungsform der Erfindung werden der Schritt f) und der Schritt e) zeitgleich durchgeführt. Durch das gleichzeitige Einleiten von gasförmigen Wasser und Abpumpen wird das System gespült, im System befindliches Restgas wird so effizient entfernt.

In einer weiteren alternativen Ausführungsform der Erfindung werden der Schritt f) und der Schritt e) wiederholt nacheinander durchgeführt. Durch das Einleiten von gasförmigen Wasser und das jeweils anschließende Abpumpen wird das System gespült, in System befindliches Restgas wird so effizient entfernt.

Besonders bevorzugt erfolgt eine Erwärmung in Schritt d) auf etwa 60 °C und ein Evakuieren in Schritt e) auf etwa 100 hPa entweder mit kontinuierlichem als alternierendem Evakuieren.

In einer weiteren Ausführungsform der Erfindung weist das Verfahren zusätzlichen den Schritt auf:
h) Durchführen eines Dichtigkeitstests.

Zur Durchführung des Dichtigkeitstests in Schritt h) wird bevorzugt nach dem Evakuieren in Schritt e) die Pumpe abgeschaltet und der Druckverlauf im geschlossenen Kühlkreislauf gemessen. Dieser sollte konstant bleiben. Erst danach erfolgt in Schritt m) das Befüllen des Kühlsystems mit Kühlflüssigkeit.

In einer weiteren Ausführungsform der Erfindung weist das Verfahren zusätzlichen den Schritt auf:
k) Entgasen der Kühlflüssigkeit.

Vorteilhafterweise wird die Kühlflüssigkeit entgast, bevor diese eingefüllt wird. Dieses kann vor oder während des Verfahrens erfolgen.

In einer weiteren Ausführungsform der Erfindung wird deionisiertes Wasser als Kühlflüssigkeit ausgewählt.

Nachfolgend ist das erfindungsgemäße Verfahren anhand in den Zeichnungen dargestellter Ausführungsbeispiele näher erläutert.
- Fig. 1: Verfahren ohne Spülen
- Fig. 2: Verfahren mit alternierendem Evakuieren
- Fig. 3: Verfahren mit kontinuierlichem Evakuieren
- Fig. 4: Polymerelektrolytmembranbrennstoffzellenanlage

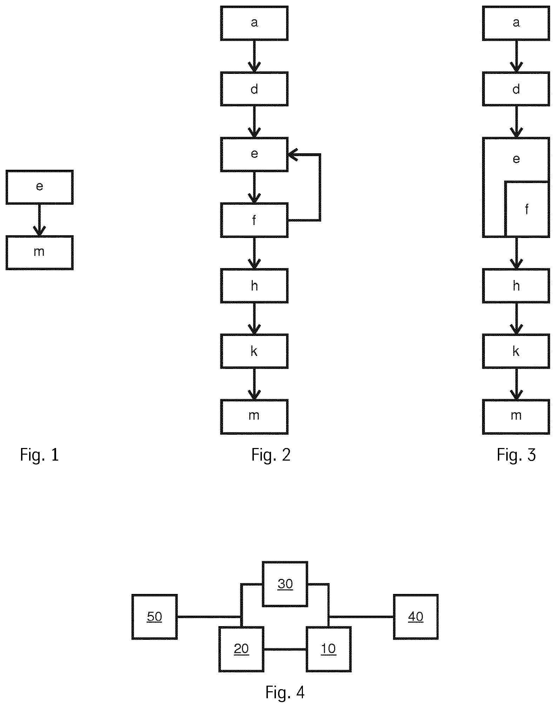

Fig. 1 zeigt ein Verfahren zum Befüllen einer Polymerelektrolytmembranbrennstoffzelle in der einfachsten Form. In Schritt e) wird das Kühlsystem der Polymerelektrolytmembranbrennstoffzelle evakuiert, beispielsweise auf 100 hPa. In Schritt m) erfolgt das Befüllen des Kühlsystems mit Kühlflüssigkeit.

Fig. 2 zeigt ein weiteres Verfahren zum Befüllen einer Polymerelektrolytmembranbrennstoffzelle, wobei zunächst in Schritt a) eine Pumpe angeschlossen wird. Anschließend wird in Schritt d) die Polymerelektrolytmembranbrennstoffzelle auf 70 °C erwärmt. Dann wird in Schritt e) das Kühlsystem der Polymerelektrolytmembranbrennstoffzelle evakuiert, beispielsweise auf 100 hPa. Nachdem Evakuieren in Schritt e) wird in Schritt f) gasförmiges Wasser eingeleitet. Anschließend wird in Schritt e) erneut evakuiert. Bevorzugt wird dieser Spülvorgang dreimal wiederholt. Anschließend erfolgt in Schritt h) ein Dichtigkeitstest, indem ohne weiter abzupumpen der Druck zeitabhängig gemessen wird. Ein Ansteigen des Drucks würde eine Undichtigkeit anzeigen. In Schritt k) wird die Kühlflüssigkeit entgast und anschließend in Schritt m) das Kühlsystem mit Kühlflüssigkeit befüllt.

Fig. 3 zeigt ein weiteres Verfahren zum Befüllen einer Polymerelektrolytmembranbrennstoffzelle, wobei zunächst in Schritt a) eine Pumpe angeschlossen wird. Anschließend wird in Schritt d) die Polymerelektrolytmembranbrennstoffzelle auf 70 °C erwärmt. Dann wird in Schritt e) das Kühlsystem der Polymerelektrolytmembranbrennstoffzelle evakuiert, beispielsweise auf 100 hPa. Während weiter in Schritt e) evakuiert wird, wird in Schritt f) gasförmiges Wasser eingeleitet.

Anschließend erfolgt in Schritt h) ein Dichtigkeitstest, indem ohne weiter abzupumpen der Druck zeitabhängig gemessen wird. Ein Ansteigen des Drucks würde eine Undichtigkeit anzeigen. In Schritt k) wird die Kühlflüssigkeit entgast und anschließend in Schritt m) das Kühlsystem mit Kühlflüssigkeit befüllt.

In Fig. 4 ist eine Polymerelektrolytmembranbrennstoffzellenanlage gezeigt, welche mit dem erfindungsgemäßen Verfahren mit Kühlflüssigkeit befüllt werden kann. Die Polymerelektrolytmembranbrennstoffzelle 10 weist einen Kühlkreislauf mit einem Wärmetauscher 20 und einer Kühlkreislaufpumpe 30 auf. Um den Kühlkreislauf evakuieren zu können, weist die Anlage eine Evakuierungspumpe 40 auf, wobei die Evakuierungspumpe beispielsweise als Membran oder drehschieberpumpe ausgeführt ist. Weiter weist die Anlage eine Befülleinrichtung für Kühlflüssigkeit 50 auf. Vorzugsweise ist die Befülleinrichtung für Kühlflüssigkeit 50 selbst evakuierbar, um das Kühlmittel zu entgasen.

### Bezugszeichen

- 10: Polymerelektrolytmembranbrennstoffzelle
- 20: Wärmetauscher
- 30: Kühlkreislaufpumpe
- 40: Evakuierungspumpe
- 50: Befülleinrichtung für Kühlflüssigkeit

## Patentansprüche

1. Verfahren zum Befüllen des Kühlsystems einer Polymerelektrolytmembranbrennstoffzelle (10) mit wenigstens einer ersten Bipolarplatte mit Kühlwasser, wobei die Polymerelektrolytmembranbrennstoffzelle (10) zur außenluftunabhängigen Energieversorgung auf einem Unterseeboot eingesetzt wird, wobei das Verfahren die folgenden Schritte aufweist:
a) Anschließen einer Pumpe,
wobei das Verfahren an Bord eines Unterseebootes durchgeführt wird,
wobei die Pumpe nicht an Bord mitgeführt wird,
e) Evakuieren eines Kühlsystems der Polymerelektrolytmembranbrennstoffzelle (10) auf einen Druck von weniger als 500 hPa,
d) Aufwärmen der Polymerelektrolytmembranbrennstoffzelle (10) auf 40 °C bis 90 °C,
wobei Schritt d) vor oder während Schritt e) durchgeführt wird,
f) Einleiten von gasförmigem Wasser,
m) Befüllen des Kühlsystems mit Kühlflüssigkeit.

2. Verfahren nach Anspruch 1, **dadurch gekennzeichnet, dass** in Schritt e) das Kühlsystem auf einen Druck von weniger als 100 hPa, insbesondere von weniger als 10 hPa evakuiert wird.

3. Verfahren nach einem der vorstehenden Ansprüche, **dadurch gekennzeichnet, dass** in Schritt d) die Polymerelektrolytmembranbrennstoffzelle (10) auf 60 °C bis 85 °C, besonders bevorzugt auf 75 °C bis 80 °C aufgewärmt wird.

4. Verfahren nach einem der vorstehenden Ansprüche, **dadurch gekennzeichnet, dass** der Schritt f) zeitgleich zu Schritt e) durchgeführt wird.

5. Verfahren nach einem der vorstehenden Ansprüche, **dadurch gekennzeichnet, dass** das Verfahren zusätzlichen aufweist:
h) Durchführen eines Dichtigkeitstests.

6. Verfahren nach einem der vorstehenden Ansprüche, **dadurch gekennzeichnet, dass** das Verfahren zusätzlichen aufweist:
k) Entgasen der Kühlflüssigkeit.

7. Verfahren nach einem der vorstehenden Ansprüche, **dadurch gekennzeichnet, dass** deionisiertes Wasser als Kühlflüssigkeit ausgewählt wird.

## Claims

1. Method for filling the cooling system of a polymer electrolyte membrane fuel cell (10) having at least one first bipolar plate with cooling water, the polymer electrolyte membrane fuel cell (10) being used to supply a submarine with energy independently of external air, where the method comprises the following steps:
a) connecting a pump,
where the method is carried out on board a submarine, wherein the pump is not carried on board,
e) evacuating a cooling system of the polymer electrolyte membrane fuel cell (10) to a pressure of less than 500 hPa,
d) heating the polymer electrolyte membrane fuel cell (10) to 40°C to 90°C,
wherein step d) is carried out before or during step e), f) introducing gaseous water,
m) filling the cooling system with cooling liquid.

2. Method according to Claim 1, **characterized in that** in step e) the cooling system is evacuated to a pressure of less than 100 hPa, more particularly of less than 10 hPa.

3. Method according to either of the preceding claims, **characterized in that** in step d) the polymer electrolyte membrane fuel cell (10) is heated to 60°C to 85°C, very preferably to 75°C to 80°C.

4. Method according to any of the preceding claims, **characterized in that** step f) is carried out concurrently with step e) .

5. Method according to any of the preceding claims, **characterized in that** the method additionally comprises: h) conducting a leak test.

6. Method according to any of the preceding claims, **characterized in that** the method additionally comprises: k) degassing the cooling liquid.

7. Method according to any of the preceding claims, **characterized in that** deionized water is selected as cooling liquid.

## Revendications

1. Procédé de remplissage du système de refroidissement d'une pile à combustible à membrane électrolyte polymère (10) comprenant au moins une première plaque bipolaire avec de l'eau de refroidissement, la pile à combustible à membrane électrolyte polymère (10) étant utilisée pour l'alimentation en énergie indépendante de l'air extérieur sur un sous-marin, le procédé comprenant les étapes suivantes :
a) le raccordement d'une pompe,
le procédé étant réalisé à bord d'un sous-marin,
la pompe n'étant pas embarquée à bord,
e) l'évacuation d'un système de refroidissement de la pile à combustible à membrane électrolyte polymère (10) à une pression inférieure à 500 hPa,
d) le chauffage de la pile à combustible à membrane électrolyte polymère (10) à une température allant de 40 °C à 90 °C,
l'étape d) étant réalisée avant ou pendant l'étape e), f) l'introduction d'eau sous forme gazeuse,
m) le remplissage du système de refroidissement avec du liquide de refroidissement.

2. Procédé selon la revendication 1, **caractérisé en ce qu'**à l'étape e), le système de refroidissement est évacué à une pression inférieure à 100 hPa, notamment inférieure à 10 hPa.

3. Procédé selon l'une quelconque des revendications précédentes, **caractérisé en ce qu'**à l'étape d), la pile à combustible à membrane électrolyte polymère (10) est chauffée à une température allant de 60 °C à 85 °C, de manière particulièrement préférée à une température allant de 75 °C à 80 °C.

4. Procédé selon l'une quelconque des revendications précédentes, **caractérisé en ce que** l'étape f) est réalisée simultanément à l'étape e).

5. Procédé selon l'une quelconque des revendications précédentes, **caractérisé en ce que** le procédé comprend en outre :
h) la réalisation d'un test d'étanchéité.

6. Procédé selon l'une quelconque des revendications précédentes, **caractérisé en ce que** le procédé comprend en outre :
k) le dégazage du liquide de refroidissement.

7. Procédé selon l'une quelconque des revendications précédentes, **caractérisé en ce que** de l'eau déionisée est choisie en tant que liquide de refroidissement.
